# EUROPÄISCHE PATENTSCHRIFT

(11) **EP 1 568 581 B1**
(45) Veröffentlichungstag und Bekanntmachung des Hinweises auf die Patenterteilung: **26.07.2006**
(21) Anmeldenummer: 04004139.4
(22) Anmeldetag: 24.02.2004
(51) Int. Cl.: B62D 51/04, B62B 5/00

(54) **Reinigungswagen**
Cleaning trolley
Chariot de nettoyage

(43) Veröffentlichungstag der Anmeldung: 31.08.2005
(73) Patentinhaber: VERMOP SALMON GMBH, D-97877 Wertheim (DE)
(72) Erfinder: Salmon, Dirk, 97877 Wertheim (DE)
(74) Vertreter: HOFFMANN EITLE

(56) Entgegenhaltungen:
- WO-A-95/20514
- DE-A- 10 010 852
- US-A- 6 000 486

## Beschreibung

Die vorliegende Erfindung betrifft einen Reinigungswagen, mit einer Basis, mindestens drei seitlich oder unter der Basis angeordneten Rädern sowie einem über der Basis angeordneten Aufbau zur Aufnahme von Reinigungsutensilien sowie einer Handhabe.

Reinigungswagen dieser Art sind in den verschiedensten Ausführungsformen seit langem bekannt (siehe zum beispiel DE-A-10010852). Die Basis, welche in der Regel als tragende Plattform oder Rahmenanordnung ausgebildet ist, kann dabei aus einer Kunststoff- oder Metallplatte oder einer Metallrohrkonstruktionen bestehen.

Der Aufbau zur Aufnahme der Reinigungsutensilien wird meist von einer Säulenkonstruktion oder einer Gestellanordnung aus Strahlrohr gebildet, die in Abhängigkeit des Einsatzzweckes variabel gestaltet und häufig nach einer Art Baukastensystem zusammengesetzt werden kann.

Insbesondere im Büro- oder Krankenhausbetrieb ist es erforderlich, neben den Reinigungsutensilien auch größere Flüssigkeitsbehälter, wie Eimer oder Tröge mit Reinigungswasser oder Pressen für Wischmopgeräte auf dem Reinigungswagen mitzuführen. In dieser Weise ausgerüstete Reinigungswagen sind relativ schwer und müssen insbesondere im Krankenhausbetrieb auch über längere Strecken bewegt werden. Dies erfordert einen nicht unerheblichen Krafteinsatz und führt zu Ermüdungserscheinungen für die Reinigungskraft, wodurch für die Reinigungsarbeiten ein erhöhter Zeitaufwand vorgesehen werden muss.

Aufgabe der vorliegenden Erfindung ist es daher einen Reinigungswagen zu schaffen, der selbst bei schwerer Beladung kräftesparend und ermüdungsfrei zu bewegen und dabei einfach aufgebaut ist.

Diese Aufgabe wird erfindungsgemäß dadurch gelöst, dass auf der Unterseite der Basis mindestens ein Elektromotor mit jeweils in Wirkverbindung stehendem Getriebe angeordnet ist, das auf mindestens eines der Räder wirkt.

Transportwagen zur Beförderung von Lasten, die von einem Elektromotor angetrieben sind, gehören zur Grundausstattung von Industriebetrieben. Sie sind allerdings technisch sehr aufwändig und besitzen relativ großvolumige Antriebe. Derartige Konstruktionen eignen sich nicht zum Einsatz von Reinigungswagen, da diese vergleichsweise filigran gestaltet und die Reinigungsutensilien zur Erzielung eines ermüdungsfreien Einsatzes nach ergonomischen Gesichtspunkten angeordnet werden müssen, so dass für übliche Antriebe kein Platz vorhanden ist.

Zwar ist es für handgeführte Wagen, wie Golfwagen, Kinder- oder Einkaufswagen bereits bekannt, Elektroantriebe vorzusehen (vgl. beispielsweise DE 199 09 020). Derartige Elektroantriebe sind jedoch aus Platzgründen meist in der Mittelachse des Antriebsrades angeordnet, d.h. als sogenannter "Nabenantrieb" ausgestaltet, der wegen des geringen Platzbedarfes im Nabenbereich aufwändige Konstruktionen und insbesondere Getriebeanordnungen erfordert, die relativ teuer und deshalb für den Einsatz in Reinigungswagen ebenfalls nicht geeignet sind.

Der Erfindung liegt der Gedanke zugrunde, anstelle von herkömmlichen schweren Industrieantrieben bzw. aufwändigen Radnabenantrieben eine Art "Unterflur-Konstruktion" zu schaffen, die den ohnehin für die notwendige Bodenfreiheit des Reinigungswagens erforderlichen Raum unter der Basis ausnützt und möglichst wenig Raum im Bereich des über der Basis vorgesehenen Aufbaues erfordert.

Vorteilhaft ist es, wenn außer dem bzw. den Elektromotoren und den jeweils mit diesen verbundenen Getriebeanordnungen auch die als Energiespeicher notwendige Akkumulatoren-Anordnung ebenfalls auf der Unterseite der Basis angebracht ist. Je nach Einsatzzweck und Betriebsdauer kann die Akkumulatoren-Anordnung jedoch gegebenenfalls auch im Bereich der Oberseite der Basis zwischen den Reinigungsutensilien angeordnet werden.

Grundsätzlich kann zur Steuerung des bzw. der Elektromotoren jede geeignete Steuerung vorgesehen werden. So ist es beispielsweise möglich einen Schubsensor vorzusehen, der den bzw. die Elektromotoren mit Energie aus der Akkumulatoren-Anordnung versorgt, sobald die Bedienungsperson eine Schubkraft auf die Handhabe oder den Wagen ausübt. Eine besonders einfache und kostengünstige Konstruktion ergibt sich jedoch, wenn die mit dem bzw. den Elektromotoren und der Akkumulatoren-Anordnung verbundene Steueranordnung aus einer einfachen Betätigungseinrichtung im Bereich der Handhabe besteht, die als Steuerelement beispielsweise einen Schieberegler, Drehgriff, Joystick oder dergleichen aufweisen kann.

Grundsätzlich reichen für den Fahrbetrieb eines derartigen Reinigungswagens drei Ränder aus. Vorteilhaft ist es jedoch, wenn vier unter der Basis angeordnete Räder vorgesehen sind, von denen zwei Räder fest und zwei Räder als sogenannte Lenkräder ausgebildet sind.

Grundsätzlich können die Räder in jeder beliebigen Weise angeordnet sein. Vorteilhaft ist es jedoch, wenn - in Fahrtrichtung gesehen - die festen Räder etwa in der Mitte des Wagens im Bereich der Seitenränder der Basis und je ein bewegliches Rad jeweils mittig im Bereich des Vorderrandes und des Hinterrandes der Basis angeordnet ist.

Eine konstruktiv besonders einfache und hinsichtlich der Schwerpunktlage optimale Anordnung wird erreicht, wenn die schweren Elemente des Antriebes, wie der Elektromotor, die Getriebeanordnung und die Akkumulatorenanordnung etwa in der Mitte unter der Basis, d.h. der Plattform bzw. der Rahmenanordnung angeordnet sind. Je nach dem gewählten System bieten sich dabei die verschiedensten Konstellation an. Eine besonders flache und die Bodenfreiheit nur geringfügig reduzierende Anordnung wird dann erreicht, wenn etwa in der Mitte der Basis zwei Elektromotoren angeordnet sind, die über jeweils ein Getriebe mit jeweils einem der festen Räder in Wirkverbindung stehen.

Es ist jedoch auch möglich, etwa in der Mitte der Basis lediglich einen Elektromotor anzuordnen und diesen über ein Getriebe mit Differential mit den fest angeordneten Rädern zu koppeln.

Um das Aufladen der Akkumulatoren-Anordnung nach dem Reinigungs- und Fahrbetrieb zu vereinfachen, ist es zweckmäßig, im Randbereich der Basis, d.h. der Plattform bzw. der Rahmenanordnung eine sogenannte "Andockleiste" anzuordnen. Die Bedienungsperson muss dann lediglich die Andockleiste in der Parkstation des Reinigungswagens mit einer fest an einer Wand oder dergleichen angeordneten Ladeleiste in Verbindung bringen, die über Kontakte die Akkumulatoren-Anordnung mit einem ortsfest angeordneten Ladegerät verbindet.

Beim Einsatz eines erfindungsgemäßen Reinigungswagens in weiträumigen Gebäuden, wie Flughäfen, Bahnhöfen oder Krankenhäusern, beträgt der Weg von der Parkstation bis zum Einsatzort häufig mehrere hundert Meter, in Sonderfällen mehrere Kilometer.

In derartigen Fällen ist es vorteilhaft, die Basis des Reinigungswagens mit einer Standeinrichtung für eine Bedienungsperson auszustatten.

Grundsätzlich kann die Standeinrichtung in der verschiedensten Weise ausgestaltet sein. So ist es beispielsweise möglich, die Standeinrichtung in die Basis zu integrieren.

Besonders vorteilhaft ist es jedoch, die Standeinrichtung als an die Basis ankoppelbare Standplattform auszugestalten, die ihrerseits mit Rädern ausgestattet ist.

Im Folgenden ist zur weiteren Erläuterung und zum besseren Verständnis ein Ausführungsbeispiel der Erfindung unter Bezugnahme auf die beigefügten Zeichnungen näher beschrieben und erläutert.
- Figur 1: zeigt in einer perspektivischen Ansicht einen Reinigungswagen mit einer Basis in Form einer Plattform, sowie einem Aufbau zur Aufnahme von Reinigungsutensilien,
- Figur 2: zeigt die Plattform des Reinigungswagens (ohne Aufbau) in einer Draufsicht, wobei die Elemente und die Anordnung des Antriebes mit punktierten Linien dargestellt sind,

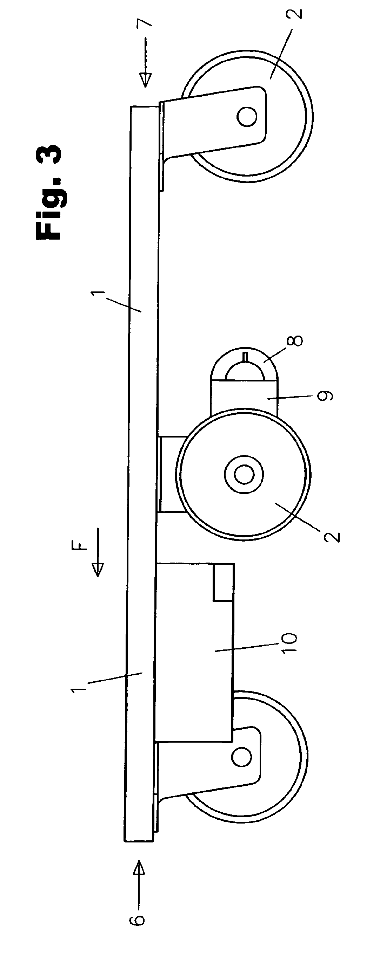

- Figur 3: zeigt eine Seitenansicht der Plattform (ohne Aufbau) aus einer Bodenperspektive und
- Figur 4: zeigt in einer der Figur 1 entsprechenden perspektivischen Ansicht einen Reinigungswagen mit einer Standeinrichtung für eine Bedienungsperson.

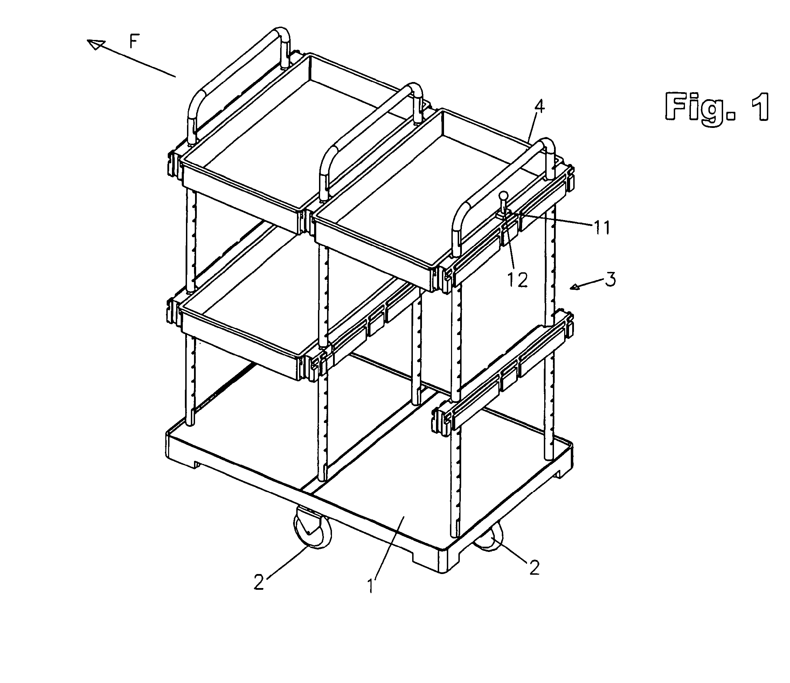

Wie aus Figur 1 hervorgeht, besteht der Reinigungswagen aus einer Basis in Form einer Plattform 1, unter der Plattform 1 angeordneten Rädern 2, sowie einem über der Plattform 1 angeordneten Aufbau 3, der der Übersichtlichkeit halber lediglich teilweise aufgebaut und unbeladen, d.h. ohne Reinigungsutensilien dargestellt ist.

Im vorliegenden Ausführungsbeispiel ist der Aufbau 3 mit einer Handhabe 4 in Form eines Handgriffes ausgestattet.

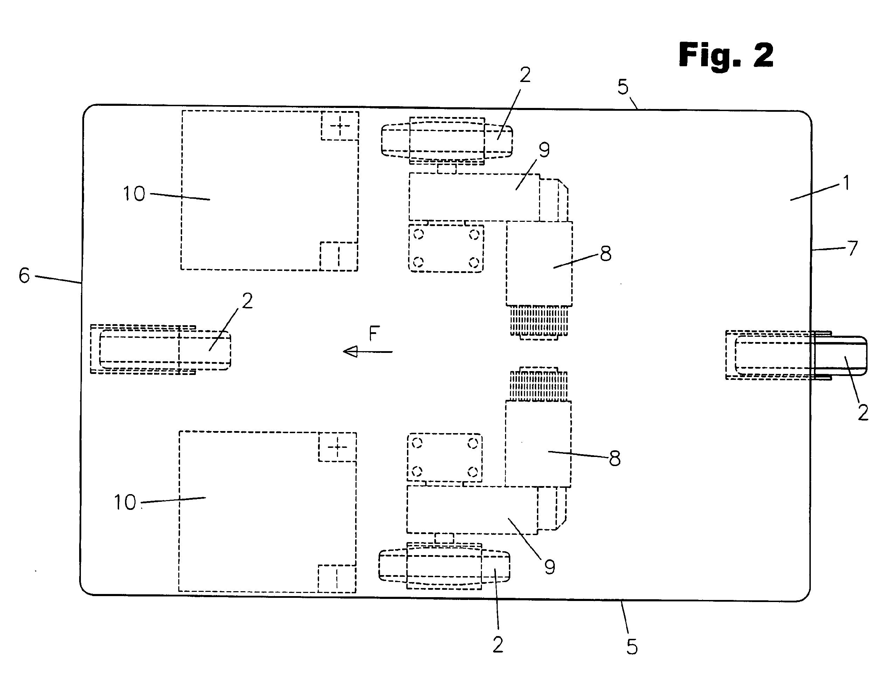

Wie insbesondere aus Figur 2 hervorgeht, besitzt der dargestellte Reinigungswagen insgesamt vier Räder 2, von denen in Fahrtrichtung F gesehen, in der Mitte des Wagens im Bereich der Seitenränder 5 zwei feste Räder 2 und je ein bewegliches Rad jeweils mittig im Bereich des Vorderrandes 6 und des Hinterrandes 7 der Plattform 1 angeordnet ist.

Das dargestellte Ausführungsbeispiel besitzt einen Antrieb mit zwei Elektromotoren 8, die jeweils über ein Getriebe 9 mit dem zugeordneten festen Rad 2 im Bereich der Seitenränder 5 in Wirkverbindung stehen. Die im Bereich des Vorderrandes 6 bzw. Hinterrandes 7 mittig angeordneten Räder 2 sind lenkbar.

Im vorliegenden Ausführungsbeispiel ist eine aus zwei Akkumulatoren 10 bestehende Akkumulatorenanordnung ebenfalls auf der Unterseite der Plattform 1 angeordnet.

Die Elektromotoren 8 sind beim dargestellten Ausführungsbeispiel mit den Akkumulatoren 10 über eine elektronische Steueranordnung (nicht dargestellt) verbunden. Die Steueranordnung ist mit einer Betätigungseinrichtung 11 (Figur 1) verbunden, die im Bereich der Handhabe 4 angeordnet ist und einen Joystick 12 aufweist, über den die Drehzahl der beiden Elektromotoren jeweils unabhängig voneinander in an sich bekannter Weise gesteuert werden kann.

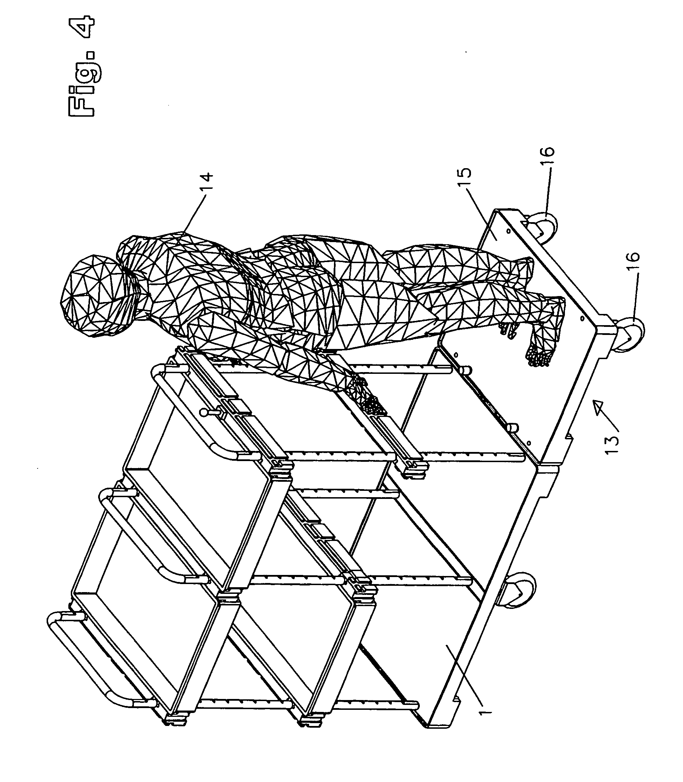

Bei dem in Figur 4 dargestellten Ausführungsbeispiel ist der erfindungsgemäße Reinigungswagen mit einer Standeinrichtung 13 für eine Bedienungsperson 14 ausgestattet.

Die Standeinrichtung 13 wird in diesem Ausführungsbeispiel von einer Standplattform 15 für die Bedienungsperson 14 gebildet, die durch eine geeignete Kupplungseinrichtung (nicht dargestellt) an die Basis 1 des Reinigungswagens ankoppelbar ist.

Die Standplattform 15 ist mit separaten Rädern 16 ausgestattet, die die Hauptlast des Gewichtes der Bedienungsperson 14 auf den Boden abtragen.

Die in Figur 4 dargestellte Anordnung hat den Vorteil, dass der Reinigungswagen relativ und schnell einfach für den jeweiligen Betrieb umgerüstet werden kann.

## Patentansprüche

1. Reinigungswagen, mit einer Basis, mindestens drei seitlich oder unter der Basis (1) angeordneten Rädern (2) sowie einem über der Basis (1) angeordneten Aufbau (3) zur Aufnahme von Reinigungsutensilien sowie einer Handhabe (4),
**dadurch gekennzeichnet, dass**
auf der Unterseite der Basis (1) mindestens ein Elektromotor (8) mit jeweils in Wirkverbindung stehendem Getriebe (9) angeordnet ist, das auf mindestens eines der Räder (2) wirkt.

2. Reinigungswagen nach Anspruch 1,
**dadurch gekennzeichnet, dass**
auf der Unterseite der Basis eine Akkumulatoren-Anordnung (10) angebracht ist.

3. Reinigungswagen nach Anspruch 1,
**dadurch gekennzeichnet, dass**
ein mit dem jeweiligen Elektromotor (8) und der Akkumulatoren-Anordnung verbundene Steueranordnung vorgesehen ist, die eine Betätigungseinrichtung (11) im Bereich der Handhabe (4) aufweist.

4. Reinigungswagen nach einem oder mehreren der vorhergehenden Ansprüche,
**dadurch gekennzeichnet, dass**
vier unter der Basis (1) angeordnete Räder (2) vorgesehen sind, von denen zwei Räder fest und zwei Räder lenkbar sind.

5. Reinigungswagen nach Anspruch 4,
**dadurch gekennzeichnet, dass**
in Fahrtrichtung gesehen die festen Räder (2) etwa in der Mitte des Wagens im Bereich der Seitenränder (5) der Basis (1) und je ein bewegliches Rad (2) jeweils mittig im Bereich des Vorderrandes (6) und des Hinterrandes (7) der Basis (1) angeordnet sind.

6. Reinigungswagen nach Anspruch 5,
**dadurch gekennzeichnet, dass**
etwa in der Mitte der Basis (1) zwei Elektromotoren (8) angeordnet sind, die über jeweils ein Getriebe (9) mit jeweils einem der festen Räder (2) in Wirkverbindung stehen.

7. Reinigungswagen nach Anspruch 5,
**dadurch gekennzeichnet, dass**
etwa in der Mitte der Basis (1) ein Elektromotor angeordnet ist, der über ein Getriebe mit Differential mit den fest angeordneten Rädern in Wirkverbindung steht.

8. Reinigungswagen nach Anspruch 3,
**dadurch gekennzeichnet, dass**
die Handhabe (4) einen Handgriff und die Betätigungseinrichtung (11) einen im Bereich des Handgriffes angeordneter Joystick (12) aufweist.

9. Reinigungswagen nach einem oder mehreren der vorhergehenden Ansprüche,
**dadurch gekennzeichnet, dass**
die Akkumulatorenanordnung mit einer im Randbereich der Basis angeordneten Andockleiste ausgestattet ist.

10. Reinigungswagen nach einem oder mehreren der vorhergehenden Ansprüche,
**dadurch gekennzeichnet, dass**
die Basis (1) mit einer Standeinrichtung (13) für eine Bedienungsperson (14) ausgestattet ist.

11. Reinigungswagen nach Anspruch 10,
**dadurch gekennzeichnet, dass**
die Standeinrichtung (13) in die Basis integriert ist.

12. Reinigungswagen nach Anspruch 10,
**dadurch gekennzeichnet, dass**
die Standeinrichtung (13) als an die Basis ankoppelbare Standplattform (15) mit Rädern (16) ausgestaltet ist.

## Claims

1. Cleaning trolley, with a base, at least three wheels (2), arranged laterally or under the base (1), and also a structure (3) arranged above the base (1) to accommodate cleaning utensils and also a handle (4), **characterised in that** arranged on the underside of the base (1) is at least one electric motor (8) with a transmission (9) in active connection in each case, which acts on at least one of the wheels (2).

2. Cleaning trolley according to claim 1, **characterised in that** an accumulator arrangement (10) is mounted on the underside of the base.

3. Cleaning trolley according to claim 1, **characterised in that** a control arrangement connected to the respective electric motor (8) and the accumulator arrangement is provided, which has an actuating device (11) in the area of the handle (4).

4. Cleaning trolley according to one or more of the preceding claims, **characterised in that** four wheels (2), arranged under the base (1), are provided, of which two wheels are fixed and two wheels are steerable.

5. Cleaning trolley according to claim 4, **characterised in that**, seen in the direction of travel, the fixed wheels (2) are arranged approximately in the centre of the trolley in the area of the side edges (5) of the base (1) and one each of the movable wheels (2) is arranged in each case in the centre of the area of the front edge (6) and the rear edge (7) of the base (1).

6. Cleaning trolley according to claim 5, **characterised in that** approximately in the centre of the base (1) are arranged two electric motors (8), which are in active connection with one of the fixed wheels (2) in each case via a transmission (9) in each case.

7. Cleaning trolley according to claim 5, **characterised in that** approximately in the centre of the base (1) is arranged an electric motor (8), which is in active connection with the fixed wheels via a transmission with differential.

8. Cleaning trolley according to claim 3, **characterised in that** the handle (4) comprises a handgrip and the actuating device (11) a joystick (12) arranged in the area of the handgrip.

9. Cleaning trolley according to one or more of the preceding claims, **characterised in that** the accumulator arrangement is fitted with a docking strip arranged in the edge area of the base.

10. Cleaning trolley according to one or more of the preceding claims, **characterised in that** the base (1) is fitted with a standing device (13) for an operator (14).

11. Cleaning trolley according to claim 10, **characterised in that** the standing device (13) is integrated into the base.

12. Cleaning trolley according to claim 10, **characterised in that** the standing device (13) is configured as a standing platform (15) with wheels (16), which can be joined to the base.

## Revendications

1. Chariot de nettoyage avec une base, au moins trois roues (2), disposées latéralement ou sous la base (1), ainsi qu'avec un châssis (3) disposé sur la base (1) pour recevoir des ustensiles de nettoyage ainsi qu'une moyen de préhension (4),
**caractérisé en ce que**
en face intérieur de la base (1) est disposé au moins un moteur électrique (8), avec une transmission (9) placée respectivement en liaison fonctionnelle et agissant sur au moins l'une des roues (2).

2. Chariot de nettoyage selon la revendication 1,
**caractérisé en ce qu'**
un agencement d'accumulateurs (10) est monté en face inférieure de la base.

3. Chariot de nettoyage selon la revendication 1,
**caractérisé en ce que**
un dispositif de commande, relié au moteur électrique (8) respectif et à l'agencement d'accumulateurs, est prévu, présentant un dispositif d'actionnement (11) dans la zone de la moyen de préhension (4).

4. Chariot de nettoyage selon l'une ou plusieurs des revendications précédentes,
**caractérisé en ce que**
quatre roues (2), disposées sur la base (1), sont prévues, dont deux roues sont fixes et deux sont directionnelles.

5. Chariot de nettoyage selon la revendication 4,
**caractérisé en ce que**,
en observant dans la direction de roulage, les roues fixes (2) sont disposées à peu près au centre du chariot, dans la zone des bords latéraux (5) de la base (1), et chaque fois une roue (2) mobile est disposée centralement dans la zone du bord avant (6) et du bord arrière (7) de la base (1).

6. Chariot de nettoyage selon la revendication 5,
**caractérisé en ce que**,
à peu près au centre de la base (1), sont disposés deux moteurs électriques (8), reliés fonctionnellement, par chaque fois une transmission (9), à chaque fois l'une des roues fixes (2).

7. Chariot de nettoyage selon la revendication 5,
**caractérisé en ce que**,
à peu près au centre de la base (1), est disposé un moteur électrique, relié fonctionnellement, par une transmission à différentiel, aux roues montées fixes.

8. Chariot de nettoyage selon la revendication 3,
**caractérisé en ce que**
la moyen de préhension (4) présente une poignée, et le dispositif d'actionnement (11) présente un manchet (12), disposé dans la zone de la poignée.

9. Chariot de nettoyage selon l'une ou plusieurs des revendications précédentes,
**caractérisé en ce que**
l'agencement d'accumulateurs est équipé d'une bande d'accostage, disposée dans la zone de la base.

10. Chariot de nettoyage selon l'une ou plusieurs des revendications précédentes,
**caractérisé en ce que**
la base (1) est équipée d'un dispositif support (13) pour un opérateur (14).

11. Chariot de nettoyage selon la revendication 10,
**caractérisé en ce que**
le dispositif support (13) est intégré dans la base.

12. Chariot de nettoyage selon la revendication 10,
**caractérisé en ce que**
le dispositif support (13) est réalisé sous forme de plateforme support (15), susceptible d'être couplée à la base, équipée de roues (16).
